Europäisches Patentamt

European Patent Office

Office européen des brevets

(19)

(11) Publication number: **0 280 810**

**A2**

(12) **EUROPEAN PATENT APPLICATION**

(21) Application number: **87309712.5**

(22) Date of filing: **03.11.87**

(51) Int. Cl.⁴: **A23N 17/00**

(30) Priority: **04.03.87 GB 8705010**

(43) Date of publication of application:
**07.09.88 Bulletin 88/36**

(84) Designated Contracting States:
**AT BE CH DE ES FR GB GR IT LI LU NL SE**

(71) Applicant: **BALFOUR MANUFACTURING COMPANY LIMITED**
**1, Stokes Place St. Stephen's Green**
**Dublin 2(IE)**

(72) Inventor: **McAskie, William George Harold**
**Killeshandra**
**Co. Cavan(IE)**

(74) Representative: **Barlow, Roy James et al**
**J.A.KEMP & CO. 14, South Square Gray's Inn**
**London WC1R 5EU(GB)**

(54) **Apparatus for the continuous production of feedstuffs.**

(57) Apparatus for producing a feedstuff comprising at least one edible higher fatty acid and a basic oxide, comprising means (1, 2, 3) for mixing the at least one edible higher fatty acid and the basic oxide, means (4) for introducing water to the at least one edible higher fatty acid and the basic oxide to provide a reaction mixture, means (6, 9) for spreading the reaction mixture as a layer in a reaction zone, and at least one drag link conveyor (7) for advancing the aqueous reaction mixture while the water evaporates from the heat of reaction and the mixture transforms into a friable product which is discharged at the end of the said at least one drag link conveyor.

**EP 0 280 810 A2**

Fig.1.

## "APPARATUS FOR THE CONTINUOUS PRODUCTION OF FEEDSTUFFS"

The present invention relates to an apparatus for continuously producing feedstuffs, in particular feedstuffs comprising edible fatty acid salts as a protection for a further active ingredient.

Ruminant animals are known to give optimum production of meat and/or milk when fed with a proportion of their dietary requirements in the form of nutrients which ideally should not undergo any degredation or alteration in the rumen. Also, such nutrients should not themselves interfere with the normal processes of rumen fermentation.

For example, it is beneficial that a cow should be fed sufficient quantities of fat to maximise her milk production, but it is known that if a mature cow is fed more than about 500 g per day of fat, the normal process of rumen fermentation is adversely affected. In particular, triglycerides and free fatty acids can physically coat fibrous or cellulosic material in the rumen and thus prevent it from being broken down by the rumen bacteria. This effect can alter the energy matabolism of the animal and reduce the yield of milk. Free fatty acids are toxic to certain bacteria in the rumen and this too can have an adverse effect on the total digestibility of the feed. In addition, under normal conditions, unsaturated fats fed to ruminant animals are hydrogenated in the rumen with the result that most of the fats in milk are saturated. The production of milk containing substantial amounts of unsaturated fatty acid residues requires that the fat be protected from normal rumen processes.

In the case of protein metabolism, it is known that at certain periods during the growth, development and lactation of cows, insufficient microbial protein is produced in the rumen to meet the animals' full requirements for maximum growth or maximum milk production. It is therefore current practice to feed to cows feed supplements containing a high roportion of rumen-degradable protein, which is rapidly converted into microbial protein in the rumen. However, it is preferable to feed undegradable protein to cows since this can result in an improvement in growth rate and feed conversion efficiency as compared with the use of an equal weight of degradable protein.

A method of producing an acceptable feedstuff to satisfy the above requirements involves providing a water-insoluble salt of one or more edible higher fatty acids, mixing calcium oxide or other water-insoluble basic oxide with the fatty acids, and optionally a further nutritional material, under conditions such that any nutritional material present will be impregnated with the fatty acid, adding water to the mixture and allowing the calcium oxide or other basic oxide to react exothermically with the fatty acid to form the calcium (or other water-insoluble) salt thereof, and then spreading out the still hot, reacting mixture to allow sufficient water to evaporate spontaneously from the mixture to give a friable product.

The present invention aims to provide apparatus for producing feedstuffs by this method.

Accordingly, the present invention provides apparatus for continuously producing a feedstuff comprising at least one edible higher fatty acid and a basic oxide, comprising means for mixing the at least one edible higher fatty acid and the basic oxide; means for introducing water to the at least one edible higher fatty acid and the basic oxide to provide a liquid reaction mixture; means for spreading the liquid reaction mixture as a layer in a reaction zone swept by the lower run of a first drag link conveyor for advancing the aqueous liquid reaction mixture, while the water evaporates from the heat of reaction, towards a downstream end of the reaction zone; and at least one further drag link conveyor positioned to receive the drying mixture from the downstream end of said first drag link conveyor for further advancing the mixture as it transforms into a friable product which is discharged at the end of the said at least one further drag link conveyor.

Preferably the means for mixing the said at least one edible higher fatty acid and the basic oxide are operable to deliver a mixture to a pumping zone at which the introduction of the water takes place just prior to the spreading by the spreading means.

Preferably there are several said further drag link conveyors, optionally separated by sizing means for controlling the particle size of the product before completion of drying.

The various drag link conveyors may be arranged to operate in alternating directions of product advance and in vertically spaced levels so that the direction of travel of the reacting mixture is reversed upon movement from one reaction level to the next.

It is particularly advantageous for there to be several of said further drag link conveyors working in conjunction with one another whereby the upper run of one further drag link conveyor conveys the material in a first direction from which it is transferred to a lower level at which the lower run of the same drag link conveyor moves the reacting mixture in the second direction.

More preferably means may be provided for introducing air through the support surface of the or a said reaction zone near the discharge end of the apparatus, for enhancing drying by passing drying air through the mixture being advanced by the final drag link conveyor(s).

If desired, means may be provided for adding an additional nutrient to the mixture of the basic oxide and the said at least one edible higher fatty acid.

In order that the present invention may more readily be understood the following description is given, merely by way of example, with reference to the accompanying drawings in which:-

Figure 1 is a partly schematic side elevational view of a first embodiment of apparatus showing the reacting mixture travelling along two consecutive runs at different levels of the apparatus;

Figure 2 is a cross-section of the upper drag link conveyor of Figure 1; and

Figure 3 is a schematic side view showing the use of three drag link conveyors to provide for five alternating passes of the reacting mixture.

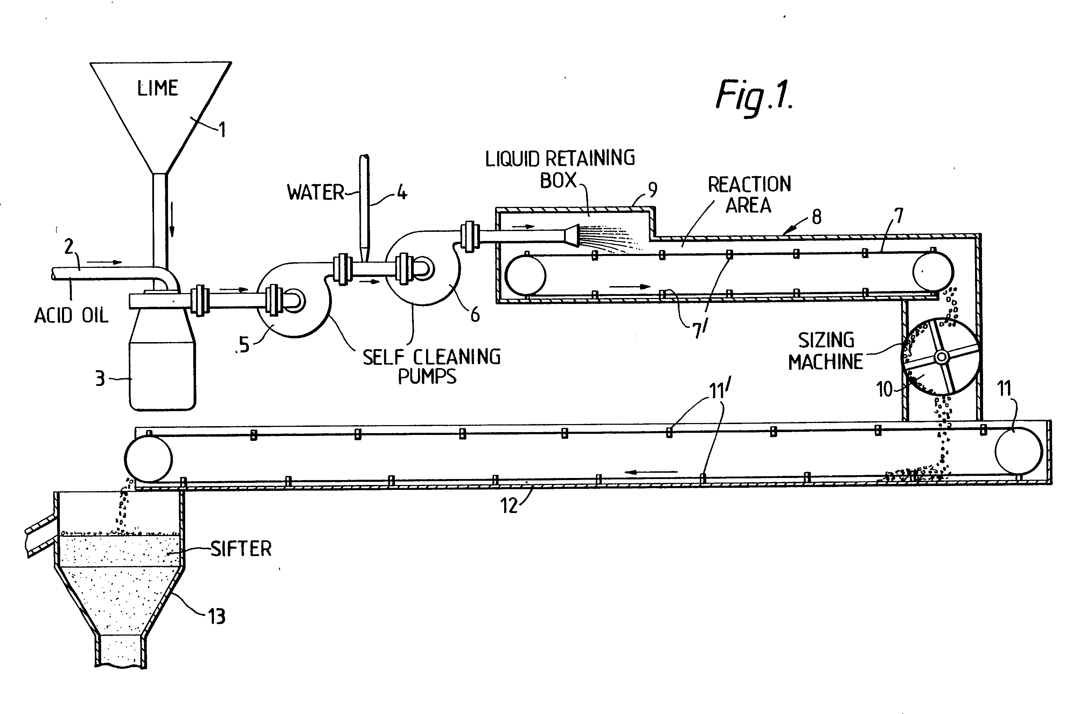

Referring now to the drawings, Figure 1 shows a hopper 1 receiving lime (calcium oxide) as the basic oxide to be used, for discharging the lime to be mixed with acid oil along an inlet line 2 into a mixing pump 3. The acid oil introduced by way of the line 2 may comprise extractable triglycerides of one or more edible higher fatty acids.

The fatty acid may be any edible higher fatty acid which forms a water-insoluble calcium salt, for example stearic acid, lauric acid, myristic acid, palmitic acid, oleic acid, linoleic acid or linolenic acid, but it is normally preferred to use a naturally-occuring mixture of fatty acids derived from, for example, beef tallow, soya oil, palm oil, corn oil, rapeseed oil or lard. Such materials are produced as by-products of oil refining. They normally contain, in addition to one or more fatty acids, also a proportion of the corresponding glycerides. The presence of such glycerides does not interfere with the process of the invention. Beef tallow acid oil and palm acid oil are particularly suitable for use in the present invention.

The mixture leaving the mixing pump 3 then passes through a pair of self cleaning pumps 5 and 6, arranged in tandem, with a water introduction line 4 to inject water into the mixture leaving the first self-cleaning pump 5 and entering the second self-cleaning pump 6.

The discharge from the second self-cleaning pump 6 is released over a channel-shaped reaction area enclosing a drag link conveyor 7 having a succession of drag links 7' circulating in a direction such that the lower run of the conveyor 7 advances the discharged liquid from the self-cleaning pump 6 in a direction towards the right hand or delivery end of the conveyor 7.

Where the liquid is discharged into the channel-shaped reaction enclosure, the ceiling is raised within a liquid retaining box 9 to accommodate the jetting liquid and to guard against splashing and loss of materials.

The channel-shaped reaction enclosure 8 has a ceiling extending along its full length in order similarly to avoid loss of materials.

At the right hand end of the reaction area 8, the now semi-solidified product falls onto a sizing machine comprising a sizing rotor 10 which controls the particle size of the semi-dried product falling into a second reaction zone where a drag link conveyor 11 advances the product leftwardly along a further reaction surface 12.

At the left hand or discharge end of the second reaction zone 12 the friable product is dropped into a sifter 13 for controlling the particle size of the finished product.

The use of a drag link conveyor such as 7 or 11 has the advantage of both maintaining positive movement of the reacting mixture along a reaction surface, and also providing for agitation of the mixture to prevent premature coagulation and the formation of a solid mass which is then more difficult to handle in the later stages of production.

The cross-sectional area of the channel-shaped reaction enclosure can be varied within quite wide limits without the need for undue modification of the drag link conveyor, since inducing mixture flow along the floor of the reaction enclosure (i.e. along the reaction surface in question) both promotes movement and initiates agitation of the mixing product.

The construction of a drag link conveyor is relatively straightforward and is very robust, and requires little maintenance.

Although the above description refers to calcium oxide as the basic oxide, which is indeed the preferred one for the feedstuffs made using the apparatus of the present invention, other basic oxides which are non-toxic and are capable of forming water-insoluble fatty acid salts, e.g. magnesium oxide, can in principle be used.

If desired, means may be provided for heating the edible higher fatty acid, for example to a temperature of the order of 80 to 100°C, in order to lower the viscosity of the acid oil used.

After the addition of water through line 4, a rapid reaction occurs between the basic oxide from hopper 1, the fatty acid from input line 2, and the water from input line 4.

This reaction is sufficiently exothermic to raise the temperature of the mixture to over 100°C under normal conditions, and the mixture is rapidly spread out by the action of the passing conveyor drag links 7', so that the steam formed by the mixture is rapidly dispersed.

Any proteinaceous or other nutritional material may be used for addition to the mixture of the basic oxide and fatty acid oil, but is likely to contain a small proportion of water, even though it appears to be "dry". The presence of such small amounts of water should of course be taken into account when forming the initial mixture, but normally it is expected that there will be no need for drying of the starting materials.

The process involved is such that during a first stage the fatty acid impregnates any nutritional material present, since the latter is normally porous. This impregnation is important for ensuring that the nutritional material becomes protected by the insoluble fatty acid salt.

The present apparatus has particular advantages when the basic oxide used is calcium oxide and the edible higher fatty acid is stearic acid. With the process and apparatus disclosed herein, the action of the drag link conveyors during forwarding of the drying mixture helps to maintain controlled particle sizes in the friable product being formed.

The prior art method of preparing animal feeds including calcium stearate involved producing a block of the calcium stearate and then grinding it in order to provide an end product of a finely divided calcium stearate. The grinding process has been known to involve considerable fire hazard, and it has even been known for the calcium stearate to explode during the grinding step. Thus, by ensuring that the reaction mixture is in a constant state of agitation as in accordance with the present invention, it is possible to avoid the need for such a grinding step and hence a much safer manufacturing process is available.

The water added from line 4 will preferably have been heated to near its boiling point, for example of the order of 90°C. This may be as an alternative to or in addition to the heating of the fatty acid. However, under normal conditions the calcium oxide and the fatty acid used will react with sufficient generation of heat to raise the temperature to a value which allows evaporation to take place and the formation of a dry product to result, when the product has been spread out on a reaction surface.

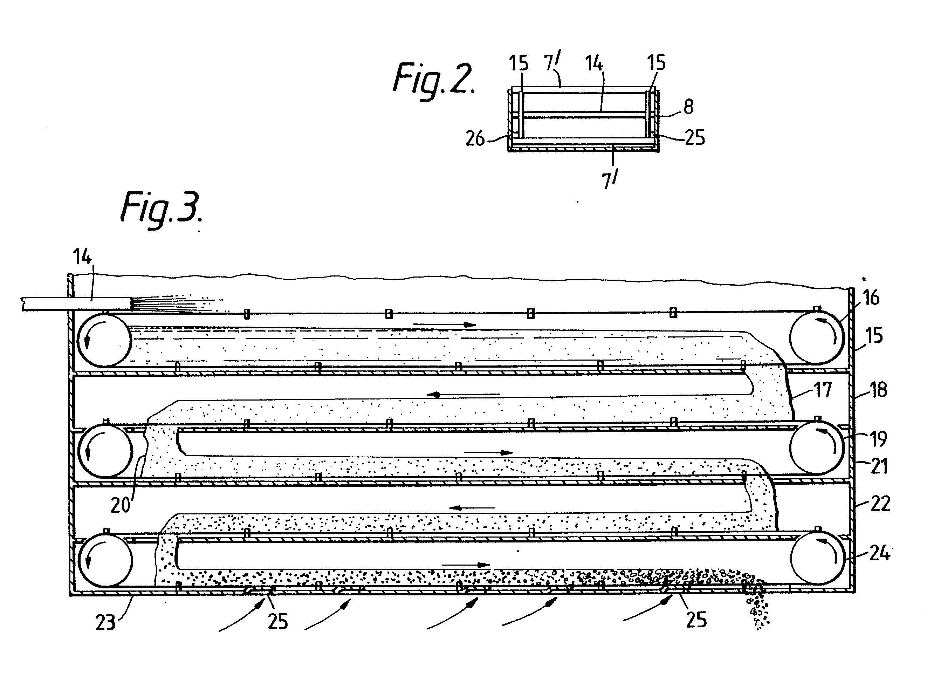

Figure 2 shows the cross-section of the upper reaction enclosure 8.

Figure 3 shows simply the drag link conveyors themselves, when adapted for using a minimum number of drag link conveyors to achieve a high number of passes of the reacting mixture in alternate directions along the apparatus.

Referring now to Figure 3, liquid is injected through inlet nozzle 14 into an upper reaction channel 15 enclosing a first drag link conveyor 16. At the right hand end of the reaction channel 15 an opening in the floor discharges the now partially dried mixture at 17 to land on the floor of a second reaction channel 18 the floor of which is wiped by the drag links of the second conveyor 19 along its leftwardly moving upper run.

At the left hand end of the channel 18 the now further dried mixture is discharged at 20 onto the floor of a third reaction channel 21 whose floor is wiped by the drag links of the second conveyor 19 along its rightwardly moving lower run.

In a similar manner the partially dried mixture is then discharged onto the floor of next the fourth reaction channel 22 and then the floor of the fifth reaction channel 23, the product being moved on these two floors by the drag links of the upper and lower runs of a third conveyor 24.

During rightward movement along the floor of the bottom reaction channel 23, the product is further dried by air entering through slots at 25.

The shapes of the drag links can be chosen to have any desired form, in order to promote movement of the drying mixture along the appropriate channel floor.

As shown in Figure 2, the drag links are held down in contact with the reaction surface, i.e. the floor of the reaction channel, by a respective fixed guide rail 26 extending along each side of the reaction channel 8.

**Claims**

1. Apparatus for continuously producing a feedstuff comprising at least one edible higher fatty acid and a basic oxide, comprising means (1, 2, 3) for mixing the at least one edible higher fatty acid and the basic oxide; means (4) for introducing water to the at least one edible higher fatty acid and the basic oxide to provide a liquid reaction mixture; means (6, 9) for spreading the liquid reaction mixture as a layer in a reaction zone (8); and means (7, 11) for advancing the aqueous liquid reaction mixture, while the water evaporates from the heat of reaction, towards a delivery location (13); characterised by the fact that the advancing means comprise a first drag link conveyor (7) having a lower run sweeping said reaction zone (8) towards a downstream end of the reaction zone, and at least one further drag link conveyor (11) positioned to receive the drying mixture from the downstream end of said first drag link conveyor for further advancing the mixture along a floor (12) as the mixture transforms into a friable product which is discharged at the delivery location (13) at the end of the said at least one further drag link conveyor.

2. Apparatus according to claim 1, characterised in that the means (5) for mixing the said at least one edible higher fatty acid and the basic oxide are operable to deliver a mixture to a pumping zone (6) at which the introduction of the water takes place just prior to the spreading by the spreading means.

3. Apparatus according to claim 1 or 2, characterised in that there are several said further drag link conveyors (16, 19, 24).

4. Apparatus according to olaim 3, characterised by further including sizing means (10) for controlling the particle size of the product before completion of drying, said sizing means (10) being located between two (7 and 11) of said drag link conveyors.

5. Apparatus according to claim 3 or 4, characterised in that the various drag link conveyors (7, 16, 19, 24) are arranged to operate in alternating directions of product advance and in vertically spaced levels so that the direction of travel of the reacting mixture is reversed upon movement from one reaction level to the next.

6. Apparatus according to claim 5, characterised in that several of said further drag link conveyors (16, 19, 24) work in conjunction with one another with the upper run of one said further drag link conveyor conveying the material in a first direction from which it is transferred to a next lower level at which the lower run of the same drag link conveyor moves the reacting mixture in the second direction.

7. Apparatus according to any one of the preceding claims, characterised by including means (25) for introducing air through the floor (23) of the or a said reaction zone near the discharge end of the apparatus, for enhancing drying by passing drying air through the mixture being advanced by the respective drag link conveyor(s) (24).

8. Apparatus according to any one of the preceding claims, characterised by including means for adding an additional nutrient to the mixture of the basic oxide and the said at least one edible higher fatty acid.

9. Apparatus according to any one of the preceding claims, characterised in that the or each said drag link conveyor (7) has its drag links (7') co-operating with longitudinally extending guide means (25, 26) to hold the drag links (7') in contact with the reaction surface.

# Fig.1.

Fig.2.

Fig.3.

0 280 810